# EUROPEAN PATENT APPLICATION

(11) **EP 4 523 892 A1**
(43) Date of publication of application: **19.03.2025**
(21) Application number: 24194513.8
(22) Date of filing: 14.08.2024
(51) Int. Cl.: B29C 65/18, B29C 65/30, B29L 31/30

(54) **HEATING DEVICE**

(30) Priority: 12.09.2023 JP 2023147379
(71) Applicant: Mitsubishi Heavy Industries, Ltd., Tokyo 100-8332 (JP)
(72) Inventor: IWANAGA, Tomoya, Tokyo, 100-8332 (JP); MORIYA, Makoto, Tokyo, 100-8332 (JP)
(74) Representative: Studio Torta S.p.A.

(57) **Abstract**

A heating device includes an electric heating element (11), a first insulator (13) and a second insulator (14) respectively layered on a front surface and a back surface of the heating element (11) so as to cover the heating element (11), a first heat transfer body (17) layered on the first insulator (13) so as to cover it and a second heat transfer body (18) layered on the second insulator (14) so as to cover it, and a circumferential edge structure (30) sealing the circumferential edges of the first and second insulators (13, 14) formed by joining directly or indirectly (shown) the first heat transfer body (17) and the second heat transfer body (18).

Preferably the heating element (11) is a sheet-like and made of graphite. By completely sealing the heating element (11), oxidation thereof is prevented.

## Description

### Technical Field

The present disclosure relates to a heating device suitable for heat-welding thermoplastic composite materials.

### Background Art

For example, heat conduction welding is known as a heat welding technique for thermoplastic composite materials used as structural materials of an aircraft. In the heat conduction welding, a heater is brought into contact with an outer surface of each thermoplastic composite material, heat generated by the heater is transferred to the inside of the material, and pressure is applied while melting a welding interface until the melting point is exceeded. Typically, a thermoplastic composite material used as a structural material of an aircraft is made of carbon fiber reinforced thermoplastics (CFRTP).

In order to fuse the thermoplastic composite material without causing internal defects, the temperature of the welding interface needs to be increased locally and quickly until the temperature exceeds the melting point. For this reason, it is preferable to use graphite as a material of a heater and employ a thin film heater in order to minimize the heat capacity of the heater itself. On the other hand, graphite is bonded to oxygen in the atmosphere from a high-temperature region exceeding 500°C to cause oxidative consumption in which a gas derived from CO₂ and CO are generated, and thus a heater made of graphite has poor durability.

Patent Document 1 proposes a welding device that can implement efficient welding in terms of time and energy (electric power). The welding device of Patent Document 1 has a five-layer structure in which a graphite heater having a sheet- or film-like shape are sandwiched on both front and back surfaces thereof between insulating materials, and the insulating materials on the front and back surfaces are covered with an outer cover and an inner cover, respectively.

### Citation List

### Patent Literature

Patent Document 1: JP 7275246 B

### Summary of Invention

### Technical Problem

The welding device of Patent Document 1 has the five-layer structure in which the graphite heater is provided, on the front and back surfaces thereof, with the insulating materials, the outer cover, and the inner cover, and thus the insulating materials and the covers are expected to have an effect of preventing oxidative consumption due to bonding between the graphite heater and oxygen in the atmosphere. However, it is desired to further reduce the oxidative consumption.

In view of the above, an object of the present disclosure is to further reduce oxidative consumption of a heater in a heating device in which the heater having a sheet-like shape is laminated with other members from the front and back sides as in Patent Document 1, for example.

### Solution to Problem

A heating device according to the present disclosure includes: a heat generator configured to generate heat when supplied with electric power; a first insulator and a second insulator respectively layered on a front surface and a back surface of the heat generator and each covering the heat generator; a first heat transfer body layered on the first insulator and covering the first insulator and a second heat transfer body layered on the second insulator and covering the second insulator; and a circumferential edge structure configured to seal circumferential edges of the first insulator and the second insulator.

In the circumferential edge structure according to the present disclosure, the circumferential edges are sealed by direct or indirect joining of the first heat transfer body and the second heat transfer body.

### Advantageous Effects of Invention

The heating device according to the present disclosure includes the circumferential edge structure in which the circumferential edges are sealed by direct or indirect joining of the first heat transfer body and the second heat transfer body. Having the circumferential edge structure blocks an entering path of oxygen into the heat generator, allowing the oxidative consumption of the heat generator to be suppressed.

### Brief Description of Drawings

FIG. 1 is a perspective view illustrating a heating device according to an embodiment.
FIG. 2 is a cross-sectional view of the heating device of FIG. 1 and an enlarged view of a portion of the cross-sectional view.
FIG. 3 is a plan view of the heating device of FIG. 1.
FIG. 4 is a diagram illustrating an example of heat welding of CFRTP with the heating device of FIG. 1.
FIG. 5 is a diagram illustrating a modification example of the heating device according to the embodiment.

### Description of Embodiments

A heating device 1 according to an embodiment will be described below with reference to the accompanying drawings.

As an example, the heating device 1 is suitably used for joining two members made of carbon fiber reinforced thermoplastic plastics (hereinafter CFRTP) by welding. The heating device 1 has a multilayer structure in which a heat generator having a sheet-like shape is sandwiched, and a portion which can be an entering path of oxygen in the multilayer structure is sealed. The heating device 1 can reduce the oxidative consumption of a heat generator 11 by employing diffusion bonding as a preferred sealing means.

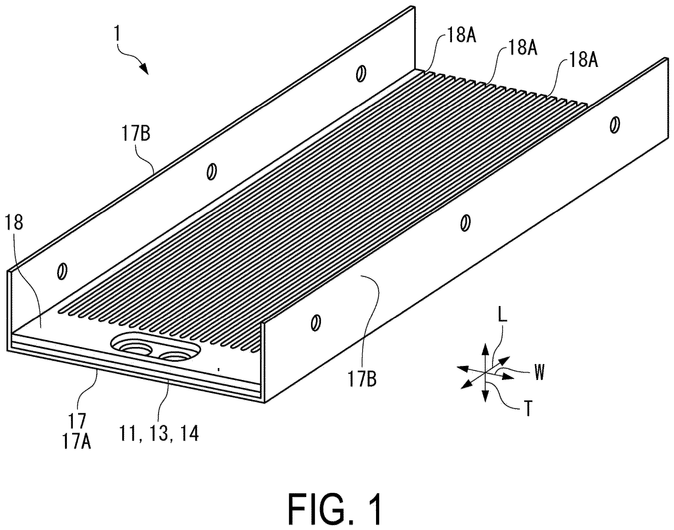

### Configuration of Heating Device 1: See FIGS. 1, 2 and 3

The heating device 1 is configured by layering the heat generator 11, a pair of a first insulator 13 and a second insulator 14 made of electrically insulating materials respectively layered on the front and back surfaces of the heat generator 11, and a first heat transfer body 17 and a second heat transfer body 18 respectively layered on the first insulator 13 and the second insulator 14.

### Heat Generator 11

The heat generator 11 is a sheet-like heating element that generates heat when supplied with electric power. The heat generator is made of graphite, for example, and generates heat when supplied with electric power. A graphite heater emits a large amount of infrared radiation, can generate heat in a short time of 1 second or less, and is thus suitable for heat welding of CFRTP. However, the graphite heater is merely a preferred example in the present disclosure. In addition, a carbon heater using carbon fibers as a heating element, a ceramic heater using alumina (Al₂O₃), silica nitride (Si₃N₄), or the like as a heating element, a thin metal film heater, or the like can be used in the present disclosure.

The outer shape of the heat generator 11 is a rectangle as an example in a plan view, but may have another shape. Note that "rectangle" refers to a quadrangle having four equal corners. In addition, in order to absorb thermal expansion during heating and to increase a laying amount per unit area, it is preferable to employ a zigzag pattern.

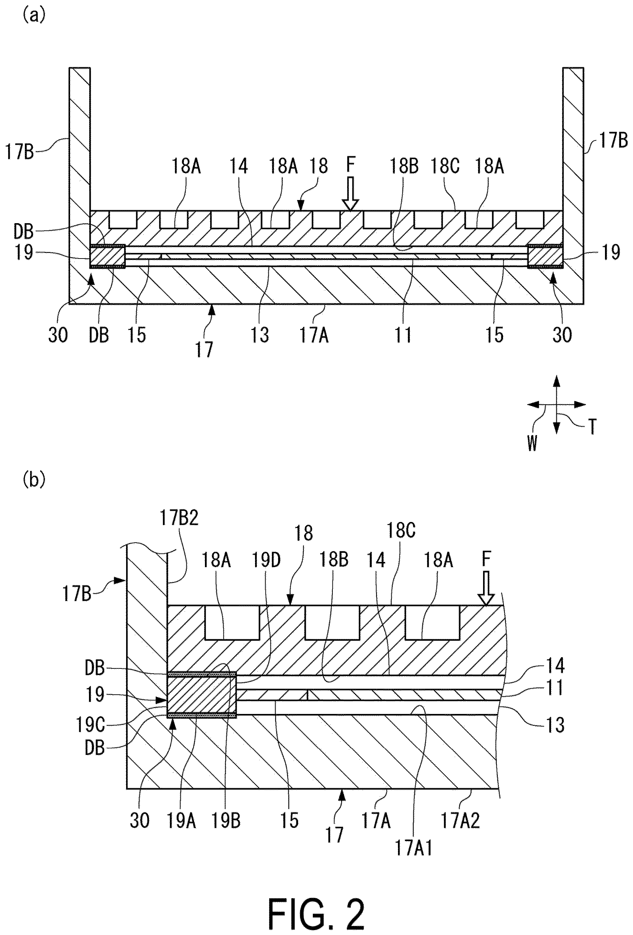

### First Insulator 13, Second Insulator 14: See FIG. 2

The first insulator 13 and the second insulator 14 are layered on the front and back surfaces of the heat generator 11, respectively.

The first insulator 13 and the second insulator 14 are provided to electrically insulate the heat generator 11 from the first heat transfer body 17 and the second heat transfer body 18. The material constituting the first insulator 13 and the second insulator 14 is not limited as long as the heat generator 11 can be insulated from the first heat transfer body 17 and the second heat transfer body 18. However, in consideration of heat resistance, it is preferable to use mica as the first insulator 13 and the second insulator 14.

### First Heat Transfer body 17, Second Heat Transfer Body 18: See FIG. 2

The first heat transfer body 17 and the second heat transfer body 18 are layered on the first insulator 13 and the second insulator 14, respectively, and constitute outer layers in the heating device 1. The first heat transfer body 17 and the second heat transfer body 18 transfer heat generated by the heat generator 11 supplied with electric power to outside.

The first heat transfer body 17 is a member having a C-shaped cross-sectional shape and includes a heat transfer wall 17A having a flat shape and side walls 17B, 17B that rise from both ends of the heat transfer wall 17A in a second direction W so as to be continuous with the heat transfer wall 17A. A first surface 17A1 of the heat transfer wall 17A covers a surface of the first insulator 13, and a first surface 17B2 of the side wall 17B covers a side of the first insulator 13 and the heat generator 11. A second surface 17A2 of the heat transfer wall 17A comes into contact with and transfers heat to a CFRTP member to be fused, as the heating device 1.

The first heat transfer body 17 is made of a material having excellent thermal conductivity and a predetermined rigidity. A heat transfer rate is exemplified as a physical property for evaluating thermal conductivity, and a material having a heat transfer rate of 10 W/m K or more at room temperature is suitably used. Young's modulus is exemplified as a physical property for evaluating a rigidity, and a material having Young's modulus of 30 GPa or more at room temperature is suitably used. Preferred specific metal materials include copper or a copper alloy, aluminum or an aluminum alloy, and a stainless steel. In addition to the metal material, highly thermal conductive fine ceramics such as aluminum nitride and silicon carbide can be used as the first heat transfer body 17. The second heat transfer body 18 is also made of the same type of material as the first heat transfer body 17. However, the first heat transfer body 17 and the second heat transfer body 18 may be made of different materials.

The second heat transfer body 18 is a flat member as a whole, and is disposed to face the heat transfer wall 17A of the first heat transfer body 17 across the heat generator 11, the first insulator 13, and the second insulator 14.

In the heating device 1, the thickness of a portion where the heat generator 11, the first insulator 13, the second insulator 14, the first heat transfer body 17, and the second heat transfer body 18 are layered is preferably 10 mm or less, more preferably 5 mm or less, and still more preferably 3 mm or less.

Regarding each element constituting the heating device 1, preferably, the thickness of the heat generator 11 is 0.3 mm or less, the thicknesses of the first insulator 13 and the second insulator 14 are 0.3 mm or less, and the thicknesses of the first heat transfer body 17 and the second heat transfer body 18 are 1 mm or less.

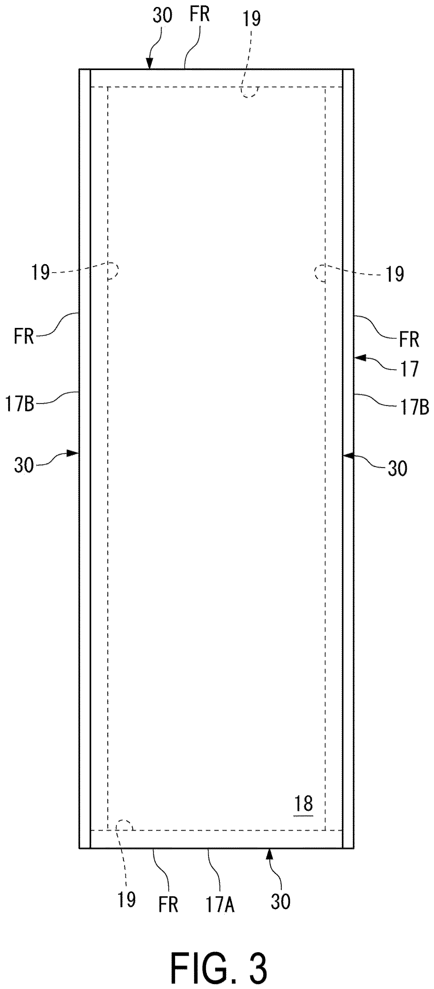

### Circumferential Edge Structure: See FIGS. 2 and 3

The heating device 1 is provided with a circumferential edge structure 30 for suppressing the oxidative consumption of the heat generator 11. The specific description will be given below.

The premise of this structure is that the first insulator 13 and the second insulator 14 are formed to have a dimension in the second direction W larger than that of the heat generator 11 and that the first insulator 13 and the second insulator 14 protrude outward in the second direction W as compared with the heat generator 11. A third insulator 15 is provided between the first insulator 13 and the second insulator 14 to fill a gap between the first insulator 13 and the second insulator 14. A joined body 19 is provided between the side wall 17B and each of the first insulator 13, the second insulator 14, and the third insulator 15 in the second direction W. In FIG. 2, the joined body 19 includes a first surface 19A facing downward, a second surface 19B opposing the first surface 19A and facing upward, a third surface 19C facing the side wall 17B side, and a fourth surface 19D opposing the third surface 19C. The heat generator 11, the first insulator 13, the second insulator 14, the third insulator 15, the joined body 19, and the side wall 17B are arranged in this order from the heat generator 11 toward a circumferential edge in the second direction W.

The joined body 19 is a member having a cuboid shape whose dimension is larger in a first direction (L) than in the second direction W, and is made of the same material as the first heat transfer body 17 and the second heat transfer body 18, for example, a copper alloy. In a third direction T, the joined body 19 is disposed between the heat transfer wall 17A of the first heat transfer body 17 and the second heat transfer body 18, the heat transfer wall 17A and the first surface 19A are in contact with each other, and the second surface 19B is in contact with the second heat transfer body 18. In the second direction W, the third surface 19C is in contact with the side wall 17B, and the fourth surface 19D is in contact with the first insulator 13, the second insulator 14, and the third insulator 15.

In order to reduce the oxidative consumption of the heat generator 11, the joined body 19 is joined to the heat transfer wall 17A of the first heat transfer body 17 on the first surface 19A, and the joined body 19 is joined to the second heat transfer body 18 on the second surface 19B. Accordingly, an entering path through which oxygen enters the heat generator 11 is blocked.

In the present disclosure, diffusion bonding DB is employed as a preferred joining means. The diffusion bonding is a method for obtaining a metallurgically-integrated joined portion by maintaining a base material in a heated and pressurized state without being melted and causing atoms at a joining interface to diffuse through joining surfaces. In the case of the present embodiment, the joined body 19 and the heat transfer wall 17A are metallurgically integrated, and the joined body 19 and the second heat transfer body 18 are integrated, with each of the first surface 19A and the second surface 19B serving as a joining interface. Thus, it is possible to prevent oxygen from entering the heat generator 11 from these portions. The above-described joining of the heat transfer wall 17A and the second heat transfer body 18 via the joined body 19 corresponds to the indirect joining in the present disclosure. Note that when a graphite heater is used as the heat generator 11, it is recommended to perform diffusion bonding in a vacuum environment in order to avoid gasification of the graphite.

In the present embodiment, any specific means may be used as long as a diffusion bonding state can be obtained by applying heat and pressure. For example, the diffusion bonding may be performed using an apparatus such as a hot press or a hot isostatic pressing (HIP). In addition, in the case of a copper alloy, it is known that a diffusion bonding state can be obtained at an interface by resistance welding accompanied by pressurization, and the diffusion bonding can also be performed by resistance welding. In the case of the example illustrated in FIG. 2, the resistance welding can be performed by heating while applying a load F at least between the heat transfer wall 17A and the second heat transfer body 18. According to JIS Z 3001, the diffusion bonding is defined as "a joining method in which members are brought into close contact with each other and pressed at a temperature equal to or lower than the melting point of a base material to such an extent that plastic deformation does not occur as much as possible to realize metallic bonding between surfaces to be joined to each other." In the diffusion bonding of copper and a copper alloy, a heating temperature of about 400°C is employed.

In the present embodiment, the diffusion bonding is used for at least the following two reasons.

The first reason is that joining target objects (the joined body 19, the heat transfer wall 17A, and the second heat transfer body 18) are metallurgically integrated with each other, and thus entering of oxygen that causes oxidative consumption can be prevented.

The second reason is that the first surface 19A and the second surface 19B, which are hidden inside by the heat transfer wall 17A and the second heat transfer body 18, must be joined, and thus it is difficult to employ other joining methods such as welding.

Although the circumferential edge structure 30 at both end portions in the second direction W has been described above, preferably, the circumferential edge structure 30 is also provided at both end portions in the first direction L in plan view, as illustrated in FIG. 3. That is, the circumferential edge structure 30 is preferably provided across a region of a circumferential edge FR surrounding the first direction L and the second direction W.

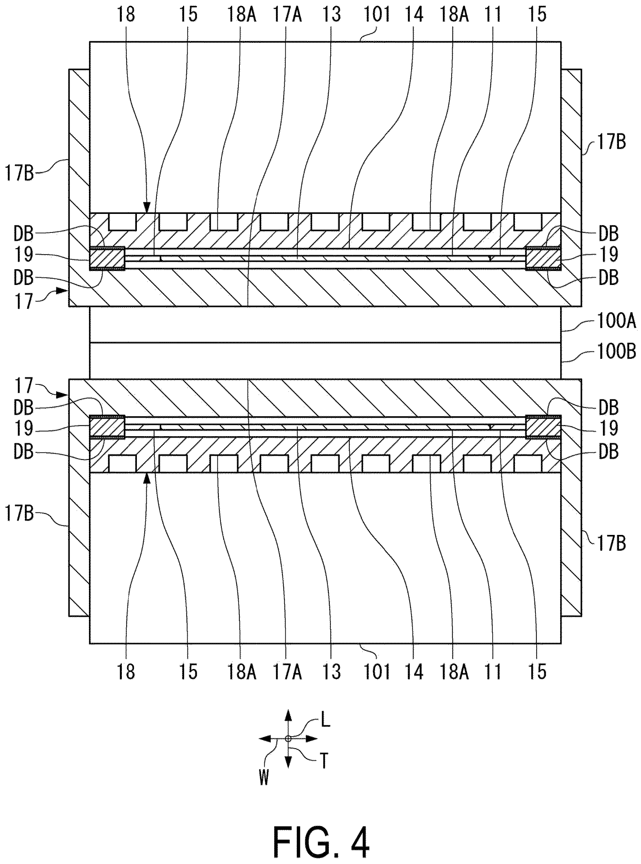

### Specific Example of Welding: See FIG. 4

A case in which two members made of CFRTP are joined by welding using the heating device 1 will be described. This case is an example in which two heating devices 1, 1 are prepared, and the respective first heat transfer bodies 17, 17 are arranged on the upper side and the lower side so as to face each other with a space therebetween. A pair of welding target objects 100A, 100B made of CFRTP are sandwiched between the first heat transfer body 17 and the first heat transfer body 17.

In a space between the second heat transfer body 18 and the side walls 17B, 17B, for example, a heat insulator 101 can be disposed without a gap. By providing the heat insulator 101, the amount of heat generated by the heat generator 11 is prevented from being discharged to the outside without being directed to the welding target objects 100A, 100B. The heat insulator 101 also serves as a load for the welding target objects 100A, 100B.

In addition, the heat insulator 101 is disposed so as to be in contact with the second heat transfer body 18, thereby closing a plurality of cooling grooves 18A formed in the second heat transfer body 18 from the third direction T. Accordingly, the cooling grooves 18A become closed spaces except for portions in the first direction L. After heating necessary for welding the welding target objects 100A, 100B is performed, it is preferable that fused portions are immediately solidified. For this reason, after the necessary heating is performed, cooling air is continuously supplied to the cooling grooves 18A forming the closed spaces. Since the supplied air cools the welding target objects 100A, 100B via the second heat transfer body 18, solidification of the fused portions can be facilitated.

Although an example in which two heating devices 1, 1 are used has been described above, only one heating device 1 may be used to fuse the welding target objects 100A, 100B.

### Effects of Heating Device 1

As described above, according to the heating device 1, since a portion which can be an entering path of oxygen to the heat generator 11 is blocked by the diffusion bonding DB, the oxidative consumption of the heat generator 11 during welding of CFRTP can be suppressed. In particular, the diffusion bonding DB metallurgically integrally bonds between the joined body 19 and the first heat transfer body 17 and between the joined body 19 and the second heat transfer body 18, and thus has a high degree of blocking the entering path of oxygen.

According to the heating device 1, the diffusion bonding can be performed while applying the load F in the third direction T in which the joined body 19 is sandwiched between the first heat transfer body 17 and the second heat transfer body 18. Thus, according to the heating device 1, diffusion bonding between the joined body 19 and the heat transfer wall 17A and diffusion bonding between the joined body 19 and the second heat transfer body 18 can be easily achieved by heating while applying the load F to the same region in the same direction.

According to the heating device 1, since the joined body 19 is interposed between the first heat transfer body 17 and the second heat transfer body 18, plate materials having a flat and simple shape can be used as the surfaces of the first heat transfer body 17 and the second heat transfer body 18 facing each other including portions to be diffusion-bonded. Therefore, the heating device 1 has a low production cost.

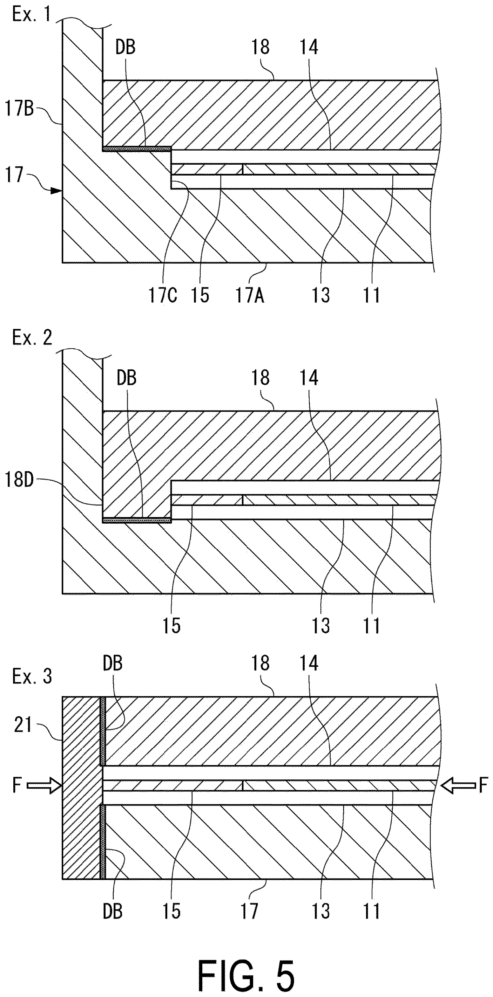

### Modification Example of Circumferential Edge Structure: See FIG. 5

Although an example of a preferred circumferential edge structure has been described, a circumferential edge structure described below can be employed in the present embodiment.

The heating device 1 performs diffusion bonding using the joined body 19. However, in the present disclosure, circumferential edges of the first heat transfer body 17 and the second heat transfer body 18 can be directly diffusion-bonded without using the joined body 19. This corresponds to the direct joining in the present disclosure. That is, a portion corresponding to the joined body 19, which is prepared as a separate body in the heating device 1, is provided at the first heat transfer body 17 or the second heat transfer body 18. FIG. 5 illustrates an example (Ex. 1) in which a joined portion 17C corresponding to the joined body 19 is formed at the first heat transfer body 17 and an example (Ex. 2) in which a joined portion 18D corresponding to the joined body 19 is formed at the second heat transfer body 18. The joined portion 17C is formed so as to have a larger dimension (wall thickness) in the third direction T than other regions of the heat transfer wall 17A in the circumference of the heat transfer wall 17A and is formed along the side wall 17B. The joined portion 18D is formed so as to have a larger dimension in the third direction T than other regions of the second heat transfer body 18 in the circumference of the second heat transfer body 18. When the first heat transfer body 17 including the joined portion 17C and the second heat transfer body 18 including the joined portion 18D are used, it is possible to save time and effort for preparing the joined body 19 in addition to the first heat transfer body 17 and the second heat transfer body 18.

In the example described below, the direction of the diffusion bonding is different from that in the circumferential edge structure described above. That is, although the diffusion bonding DB in the circumferential edge structure described above is provided in parallel with the first heat transfer body 17 and the second heat transfer body 18, the diffusion bonding DB may be provided so as to intersect, typically be orthogonal to the first heat transfer body 17 and the second heat transfer body 18 as in the example illustrated in FIG. 5 (Ex. 3). In this example, a portion corresponding to the side wall 17B of the first heat transfer body 17 is prepared as a separate member from the heat transfer wall 17A. That is, a side wall 21, which is substituted for the side wall 17B, is provided on a side surface of the first heat transfer body 17 and a side surface of the second heat transfer body 18, and the side wall 21 and the side surface of the first heat transfer body 17 are diffusion bonded and the side wall 21 and the side surface of the second heat transfer body 18 are diffusion-bonded. During the diffusion bonding, a load F is applied in the direction illustrated in the drawing.

Although in the above-described embodiment, the diffusion bonding is exemplified as a preferred joining method, the present disclosure can employ other joining methods exemplified below.
(1) Material joining
   (a) Arc welding, gas welding, resistance welding, and laser welding
   (b) Brazing and soldering
   (c) Friction stir welding (FSW)
(2) Chemical joining
   Adhesion (using heat-resistant inorganic adhesive)
(3) Mechanical joining
   (a) Fastening
   (b) Shrink fitting and freeze fitting

In addition, other elements can be added to the configuration described in the above-described embodiment. For example, another layer such as a highly thermal conductive sheet may be interposed between the second heat transfer body 18 and the second insulator 14 in order to suppress in-plane temperature unevenness of the heat generator 11.

The present disclosure can be apprehended as follows.

### Supplementary Note 1

A heating device (1) including:
a heat generator (11) configured to generate heat when supplied with electric power;
a first insulator (13) and a second insulator (14) respectively layered on a front surface and a back surface of the heat generator (11) and each covering the heat generator (11);
a first heat transfer body (17) layered on the first insulator (13) and covering the first insulator (13) and a second heat transfer body (18) layered on the second insulator (14) and covering the second insulator (14); and
a circumferential edge structure (30) configured to seal circumferential edges (FR) of the first insulator (13) and the second insulator (14), wherein
in the circumferential edge structure (30), the circumferential edges are sealed by direct or indirect joining of the first heat transfer body (17) and the second heat transfer body (18).

### Supplementary Note 2

In Supplementary Note 1, preferably, circumferential edges of the first heat transfer body (17) and the second heat transfer body (18) protrude to an outer side from the circumferential edges of the first insulator (13) and the second insulator (14), the circumferential edge structure (30) includes a joined body (19) disposed on the outer side from the first insulator (13) and the second insulator (14) and fitted to the first heat transfer body (17) and the second heat transfer body (18), the first heat transfer body (17) is diffusion-bonded to the joined body (19), and the second heat transfer body (18) is diffusion-bonded to the joined body (19).

### Supplementary Note 3

In Supplementary Note 1 or 2, preferably, the first heat transfer body (17) and the second heat transfer body (18) have a rectangular shape in plan view having a first direction (L) and a second direction (W) orthogonal to the first direction (L), and the circumferential edge structure (30) is provided across the circumferential edges of the first heat transfer body (17) and the second heat transfer body (18).

### Supplementary Note 4

In any one of Supplementary Notes 1 to 3, preferably, the first heat transfer body (17) includes a heat transfer wall (17A) having a rectangular shape in plan view having a first direction (L) and a second direction (W) orthogonal to the first direction (L) and includes a pair of side walls (17B, 17B) rising from both sides of the heat transfer wall (17A) in the second direction (W), and the heat transfer wall (17A) and the pair of side walls (17B, 17B) are integrally formed.

### Supplementary Note 5

In any one of Supplementary Notes 1 to 4, preferably, the second heat transfer body (18) has a rectangular shape in plan view having a first direction (L) and a second direction (W) orthogonal to the first direction (L) and includes a first surface (18B) in contact with the second insulator (14) and a second surface (18C) on a back side of the first surface (18B), and a plurality of cooling grooves (18A) for flowing a cooling medium is formed in the second surface (18C) along the first direction (L).

### Supplementary Note 6

In any one of Supplementary Notes 1 to 5, preferably, the heat generator (11) is made of a sheet-like heater made of graphite, and the first heat transfer body (17) and the second heat transfer body (18) are made of a copper alloy.

Besides the above-described embodiment, configurations described in the above-described embodiment can be selected or omitted as desired or can be changed to other configurations as necessary.

### Reference Signs List

1 Heating device
11 Heat generator
13 First insulator
14 Second insulator
15 Third insulator
17 First heat transfer body
17A Heat transfer wall
17A1 First surface
17A2 Second surface
17B Side wall
17C Joined portion
18 Second heat transfer body
18A Cooling groove
18B First surface
18C Second surface
18D Joined portion
19 Joined body
19A First surface
19B Second surface
19C Third surface
19D Fourth surface
21 Side wall
30 Circumferential edge structure
100A, 100B Welding target object
101 Heat insulator
DB Diffusion bonding
F Load
L First direction
W Second direction
T Third direction

## Claims

1. A heating device, comprising:
a heat generator configured to generate heat when supplied with electric power;
a first insulator and a second insulator respectively layered on a front surface and a back surface of the heat generator and each covering the heat generator;
a first heat transfer body layered on the first insulator and covering the first insulator and a second heat transfer body layered on the second insulator and covering the second insulator; and
a circumferential edge structure configured to seal circumferential edges of the first insulator and the second insulator, wherein
in the circumferential edge structure, the circumferential edges are sealed by direct or indirect joining of the first heat transfer body and the second heat transfer body.

2. The heating device according to claim 1, wherein
circumferential edges of the first heat transfer body and the second heat transfer body protrude to an outer side from the circumferential edges of the first insulator and the second insulator,
the circumferential edge structure includes a joined body disposed on the outer side from the first insulator and the second insulator and fitted to the first heat transfer body and the second heat transfer body,
the first heat transfer body is diffusion-bonded to the joined body, and the second heat transfer body diffusion-bonded to the joined body.

3. The heating device according to claim 2, wherein
the first heat transfer body and the second heat transfer body have a rectangular shape in plan view having a first direction and a second direction orthogonal to the first direction, and
the circumferential edge structure is provided across the circumferential edges of the first heat transfer body and the second heat transfer body.

4. The heating device according to claim 1, wherein
the first heat transfer body includes a heat transfer wall having a rectangular shape in plan view having a first direction and a second direction orthogonal to the first direction and a pair of side walls rising from both sides of the heat transfer wall in the second direction, and
the heat transfer wall and the pair of side walls are integrally formed.

5. The heating device according to claim 1, wherein
the second heat transfer body has a rectangular shape in plan view having a first direction and a second direction orthogonal to the first direction and includes a first surface in contact with the second insulator and a second surface on a back side of the first surface, and
a plurality of cooling grooves for flowing a cooling medium is formed in the second surface along the first direction.

6. The heating device according to any one of claims 1 to 5, wherein
the heat generator is made of a sheet-like heater made of graphite, and
the first heat transfer body and the second heat transfer body are made of copper or a copper alloy.
